Europäisches Patentamt

European Patent Office

Office européen des brevets

(11) Publication number:
**0 369 961**
**A2**

# (12) EUROPEAN PATENT APPLICATION

(21) Application number: **89850374.3**

(22) Date of filing: **31.10.89**

(51) Int. Cl.⁵: **G06F 9/46**

(30) Priority: **18.11.88 US 273527**

(43) Date of publication of application:
**23.05.90 Bulletin 90/21**

(84) Designated Contracting States:
**DE FR GB**

(71) Applicant: **International Business Machines Corporation**
**Old Orchard Road**
**Armonk, N.Y. 10504(US)**

(72) Inventor: **Chang, Philip Yen-Tang**
**6221 Ledge Mountain Drive**
**Austin Texas 78731(US)**
Inventor: **Ronga, Gerald Samuel**
**9902 Richelleu**
**Austin Texas 78750(US)**

(74) Representative: **Johansson, Lars E. et al**
**IBM Svenska AB Intellectual Property**
**Department 4-01**
**S-163 92 Stockholm(SE)**

(54) **Interface device and method in a computer system.**

(57) A linking system for use in a computer environment which supports interapplication messaging and interactive dialog. A link protocol comprised of a set of messages is provided and employed by a link service to interrelate information existing in single or multiple applications. This open protocol facilitates non-joint development of application programs for use in the system. The link service modules provide end user function permitting tasks executed dynamically at run time, of creating or saving links between two objects either of the same or different object types and with or without data exchange, the creation or saving of an application packet comprised of one or more links, refreshing by warm or hot links any linked object, and displaying and navigating links of a packet causing objects to be retrieved and/or refreshed. Function is provided for limited participation in the system by application programs preexisting prior to the protocol.

FIG. 3

## INTERFACE DEVICE AND METHOD IN A COMPUTER SYSTEM

Technical Field

This invention relates to a computer environment which supports application dialog and messaging and, more particularly, to information linking within a single application or between a plurality of application programs in an open protocol environment.

Background Art

There has long been a continuing and intensive effort throughout the information processing field to improve hardware and software integration so as to increase the interaction and synergism between independent application programs.

One serious problem impeding progress of such soughtafter integration relates to the very nature of the environment in which application programs are written and executed. Conventionally, in order to write applications to a particular environment, application programmers must obtain extremely detailed, highly technical, and proprietary information about the characteristics and options of the particular environment in which their application was to run and then make a variety of choices regarding the writing of their applications. Such things as choosing amongst the environment's various program languages, development tools, library functions and how they are called, including call sequence, memory management details regarding shared memory segments, data formats, and the like must all be decided.

In an effort to ease this task and increase the applications, function, and information accessible through the environment, details thereof would at times be made available by means of developer tool kits and the publication of specifications such as data formats. While this did provide opportunity for a certain degree of information exchange between applications, obvious drawbacks nevertheless still remained.

First, and perhaps most serious, there continues to be a wide variety of software development tools/options currently available in all computer environments. As a result compatibility problems continue to plague the industry, having the net effect of seriously impeding the highly desired goal of wide-ranging interconnectivity between applications.

Moreover, from the perspective of the proprietor of a closed environment, there was a decided risk to providing details of the system, namely that development of programs might thereby be facilitated which were competitive with and thereby potential replacements for those offered by the system owner who might thereby be adversely affected economically. For example, by providing details of an integrated spreadsheet, graphics, and text processing package a competitor might be able to design and offer substitute or supplemental function or components.

From the user's perspective, the aforementioned drawbacks of closed environments were equally undesirable. The user was hampered from taking advantage of application programs of greater quality or suitability, or from otherwise interacting with other systems.

Notwithstanding these serious drawbacks of closed environments, strides were nevertheless made in integrating more function and applications into new releases of these products, most notable recently with respect to the emerging fields of hypertext, hypermedia, hypersystems or the like, and application integration systems, also furthered by the recent emergence of object-oriented programming wherein an object is essentially an abstract data type consisting of a data structure and various functions acting on the structure. Such objects receive messages causing them to change, i.e., to perform operations on themselves. Further information on object oriented programming and hypersystems may be obtained from "Design and Use of Hypermedia Systems", Robert Akscyn Knowledge Systems Inc., Conference on Human Factors in Computing Systems, May 15, 1988; "Intermedia: The Architecture and Construction of An Object Oriented Hypermedia System and Application Framework", Norman Meyrowitz, IRIS, Brown University, OOPSLA Proceedings, September, 1986; and "Introduction to Object Oriented Programming and Smalltalk", Lewis J. Pinson and Richard Wiener, Addison-Wesley Publishing Company, ISBN 0-201-19127-X which are incorporated herein by reference.

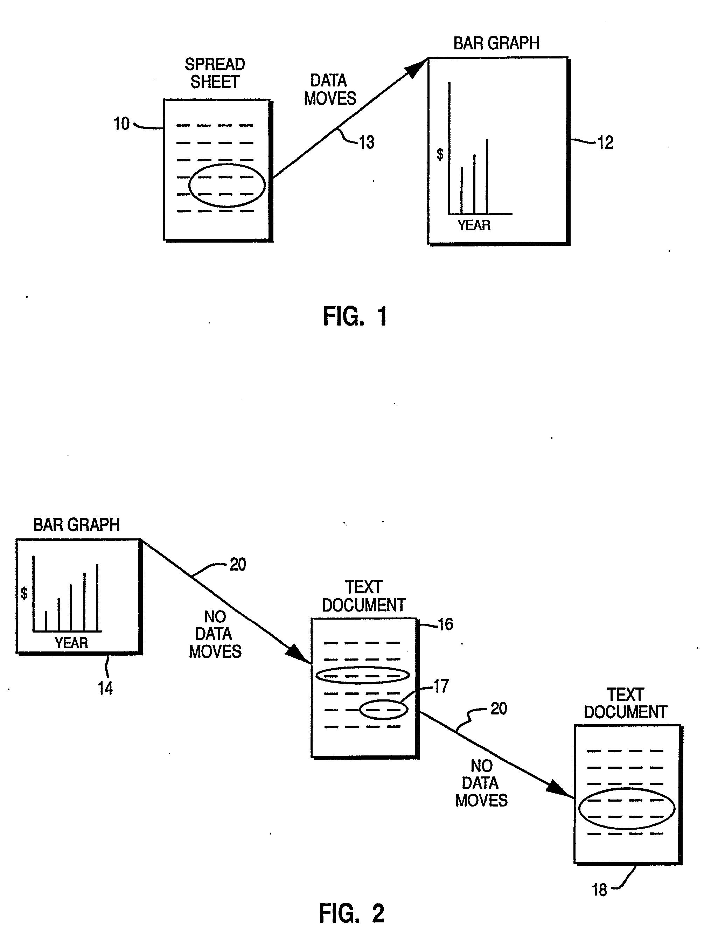

With respect to systems providing for application integration, a schematic illustration thereof may be seen with reference to Fig. 1, notably represented commercially by the products Symphony (Lotus Development Corporation), and Framework (Ashton-Tate Corporation). As may be seen in Fig. 1, in such systems a plurality of applications are provided such as a spreadsheet 10 and a graphics package 12. It may typically be desirable to transform an object or subobject associated with the spreadsheet 10 (such as data associated with a plurality of cells) into a graphic form which may be accomplished by the graphics package 12 as, for example, in the bar graph depicted therein.

In effecting such desired results several characteristics of these application integration systems may be noted. First, these are closed environments or systems, i.e., only applications built within the environment with detailed knowledge thereof may participate. It will be recalled that this requires the application programmer to learn details of the system such as private internal calls which are conventionally not published, details regarding the shared memory segments of the environment, and the like. This in turn obviously requires a great deal of joint development time and interchange between developers of various applications desired to be executed in the system.

Moreover with reference to Fig. 1, it will be noted that only temporary data links 13 are conventionally established between applications. Therefore an object from one application may be transferred to the second application but the interrelationship therebetween is not saved beyond this current instance of either application, i.e., it is destroyed whenever either of the applications involved is terminated. It follows from this that no link navigation support is provided whereby either during initial run time or thereafter these links might be recalled for inspection, editing, or the like. Again, it will be recalled that such data link type exchange had to be done through internal calls of the particular application which were typically private and not published, requiring detailed knowledge of complicated internal data structures, and the like thereby hampering a more universal integration of applications outside the closed environment. Related to this of course were the technologies for straightforward data transfer between dissimilar systems, again typically involving nothing more than format conversion and the like to facilitate exporting data between two applications for example.

With reference to Fig. 2 a schematic illustration is provided of the characteristics of the other major closed environment system wherein the benefits of linking of information is sought to be obtained, namely the hypertext/hypermedia systems currently emerging and commercially represented by the products Guide (Owl International), Hypercard (Apple Computer Company), and a research project known as Intermedia (Institute for Research in Information and Scholarship, Brown University). As distinguished from the application integration systems of Fig. 1, in these systems of Fig. 2 collectively referred to for simplicity as hypersystems, information existing in applications is only interrelated or linked (as opposed to the data actually being transmitted in the case of Fig. 1). Thus, referring to Fig. 2 objects such as information contained in a bar graph 14 may be related to a sentence in a text document 16, which may describe the bar graph 14 in some way. Further a word 17 in the text document 16 may be further explained by a paragraph in text document 18 depicted therein.

Once again it is important to note that these hypersystems are closed in the sense that only applications built within the particular hypersystem environment (i.e., using a specific language and/or set of development tools) may participate. In the operation of such systems, it is typical to find capability to establish persistent reference links amongst various objects or subobjects as well as link navigation support. In this manner, for example, the object of the bar graph 14 might be interrelated to a text document 16 by user interaction with the hypersystem whereby their logical interrelationship indicated by reference link 20 is established and retained. Thereafter, the user might desire to and be capable of referencing the bar graph data 14 from the text document 16 by recalling the links previously established.

Whereas persistent links and link navigation support may be provided, unlike the application integration systems of Fig. 1 these hypersystems typically nevertheless suffer from the same serious drawback of the Fig. 1 systems, namely that they may be found only in closed systems with all the attendant serious problems associated therewith. Moreover, typically in the hypersystems of Fig. 2 unlike the Fig. 1 systems, only reference links are provided for and not data links, whereas in the Fig. 1 systems only data links are provided for and not reference links.

Another system which sought to provide the benefits associated with both the hyper and application integration systems was a system known as Metaphor provided by the Metaphor Computer Systems Corporation. Such a system did provide for data links and a means for storing and navigating link data but nevertheless still suffered from numerous drawbacks. First and most importantly, the system still remained closed in the sense that no other applications could participate in the linking functions without detailed knowledge of the Metaphor environment. Also, reference links were not supported. With respect to provision of link data storage, there was no provision for dynamically storing at run time during a session link data which was being created at run time during the session. In contrast, after a user session with the product, a separate procedure was required for defining permanent links specified and moreover even after such a separate procedure for effecting persistent links, these links were not hot. Thus these deficiencies seriously affected productivity.

Given the foregoing deficiencies of the closed systems of Figs. 1 and 2, efforts were made in the art to provide for open systems by providing for an open protocol. In such a system one or more applications could be executed in the environment with all the attendant benefits to application integration and hypersystems without the requirement of detailed knowledge of the other applications executing in the environment. A representative example of such an open dialog facility wherein an open protocol is provided may be found in the OS/2 Presentation Manager messaging services and the related data definition exchange (DDE) protocols, details of which may be obtained by reference to Programming Windows by Charles Petzold, 1988 published by Microsoft Press, with particular reference to pps. 18-21 and which is incorporated herein by reference in its entirety.

Notwithstanding the emergence of such open systems, they nevertheless suffered from problems equally as serious as those associated with closed environments. First, in such systems the user was required to invoke all applications involved in any linking interrelationship. Related thereto was the notion of an initiating or starting application necessary in such systems which was required at run time to always obtain a registered i.d. or invocation call from the user or application relative to such other applications which were to be communicating with the initiating application.

Still another problem with such open systems was that the initiating application was required to reserve memory space for a shared segment in which data was to be passed between applications. Accordingly, a given application had the responsibility beyond simply communication on the open protocol. The application had to actually manage allocation of storage area and passing of an identifier thereof to the other application with which it was to communicate through the open protocol so as to enable the applications to work together through the shared segment.

Yet an additional shortcoming of these open dialog systems was that only a data exchange-type dialog was available supporting only the transferring of data from the initiating application to the receiving application with no notion of the aforementioned hypersystem reference links. Moreover, these open systems provided no facility for saving interrelationships or links established between applications. Accordingly, it was not possible to rerun a link. Thus every time an initiating application was brought up, for example, to send spreadsheet data to a graphics application, the same redundant steps must be repeated which were previously performed in establishing a prior link (such as the building and naming of a data segment, determine the data format for the transfer, and the like).

These and other problems associated with closed and open systems of the prior art including the aforementioned application integration and hypertext/hypermedia systems have been overcome by the present invention. A user environment and application interface are herewith provided by the instant invention such that without requiring joint development efforts by application programmers, end users may perform tasks dynamically at execution time of creating or saving links between two objects (either of the same or different object types and with or without data exchange); creating and/or saving an application packet comprised of one or more links; refreshing or having refreshed automatically any data linked object by way of warm or hot links, respectively; and displaying and navigating links of a packet causing objects to be retrieved and/or refreshed.

The present invention is defined in the attached claims.

Brief Description of the Drawings

The novel features believed to be characteristic of the invention are set forth in the appended claims. The invention itself, however, as well as other features and advantages thereof, will be best understood by reference to the following description of the preferred embodiment, when read in conjunction with the accompanying figures, wherein:

Fig. 1 is a simplified schematic illustration of an application integration system of the prior art.

Fig. 2 is a simplified schematic illustration of a hypersystem of the prior art.

Fig. 3 is a schematic illustration of the link service environment of the present invention.

Fig. 4 is a schematic illustration of the link service architecture of the present invention.

Fig. 5 is a schematic illustration of the scenario for creating a link in accordance with the present invention.

Fig. 6 depicts the system for link service support of existing applications in accordance with the present invention.

Fig. 7 is a functional block diagram of a computer system environment including the link service functions of the present invention.

Fig. 8 is a flow diagram depicting the logic of a link protocol (LP) application handling link protocols and user interaction.

Fig. 9 is a more detailed flow diagram of the logic for handling link user interaction shown in block 122 of Fig. 8.

Fig. 10 is a more detailed flow diagram of the logic for handling link protocols as shown in block 124 of Fig. 8.

Fig. 11 is a detailed flow diagram of the logic for link packet manager (LPM) functions provided by the link packet manager of Fig. 4.

Figs. 12A-G are detailed functional diagrams of the functions performed by the link message manager (LMM) of Fig. 4 after receipt of protocols from an application C or link packet manager of Fig. 4.

Fig. 13 is a diagram of the flow used by the service to receive and send data between two LP applications.

## Best Mode For Carrying Out The Invention

With the characteristics of prior systems in mind which were hereinbefore described with reference to Figs. 1 and 2, Fig. 3 depicts pictorially the link service environment of the present invention and the distinctions over these prior systems. First it will be noted that the present invention provides for composite objects 21 to which may be interrelated a plurality of other objects or subobjects of widely varying types by means of links which may also vary in type and function. For example, the composite object 21 may have image or audio objects 28, text objects 30, or graphic objects 26 interrelated by links 40, 44, and 42, respectively. The graphic objects 26 may further be interrelated to still other objects such as a spreadsheet object 24 or data object 22 by means of links 36 and 38. Similarly, the text object 30 may in turn be related to yet further text objects 32 and 34 by links 46 and 48, respectively. To illustrate that the invention contemplates interrelating widely differing types of objects, a text to speech object 50 has further been included and is interrelated to text object 30 by a link 52.

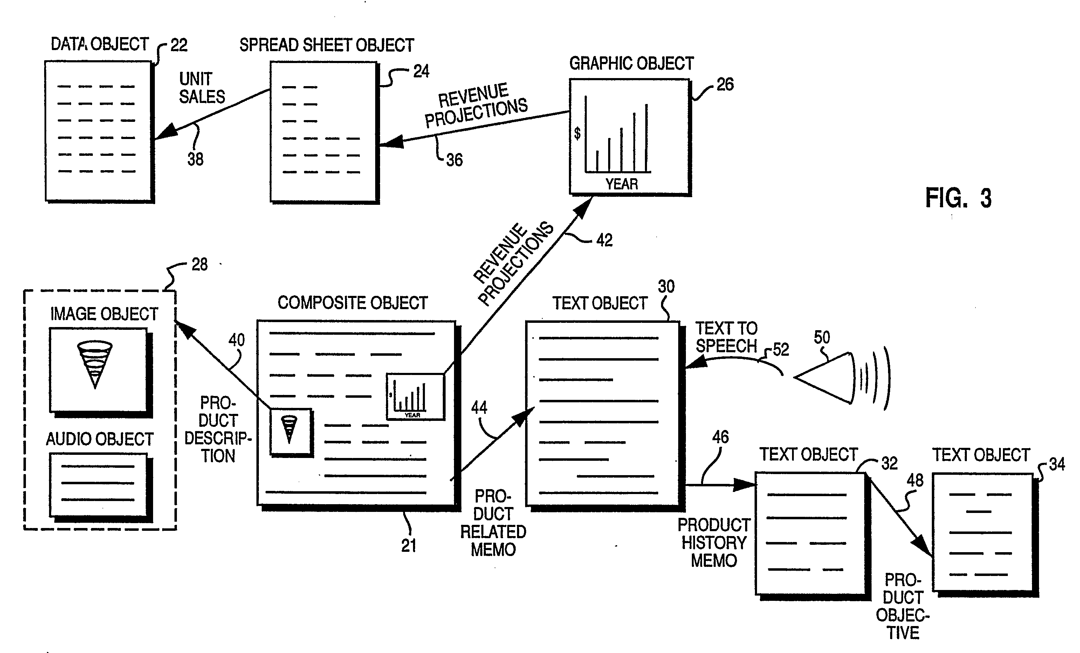

Not only does Fig. 3 illustrate the wide variety of objects interrelated in accordance with the invention, but the notion of both data and reference links being provided for in the same system. For example, when users are interacting with composite object 20 it may be desirable to simply note by means of link 40 the previously established interrelationship to image or audio objects 28 thereby referencing the information contained in these objects 28. In this case, the link 40 is merely a reference link and such links as well as the objects they interrelate may be graphically depicted to the user so as to enable editing, navigating or establishment of yet additional links as desired.

Similarly, a reference link 42 may be established whereby it is apparent from inspection of the composite object 20 that interrelated data is available for inspection, editing, and the like by reference to graphic object 26 established through the reference link 42. However, link 36 is intended to indicate a feature of the invention wherein data links such as 36 are also provided which may be established, navigated and edited as required by the user. With respect to these types of links, changes made in an object such as cells in the spreadsheet object 24 may be reflected, either automatically or semiautomatically in another object such as the graphic object 26. Thus, for example, changing data referring to cells in the spreadsheet object 24 would automatically be reflected as changes in the graph of the graphic object 26. As will be made clearer hereinafter, when these data links such as link 36 are established, as an alternative to their functioning as hot links wherein these automatic object changes transpire, this function may be specified by the user to be semiautomatic or "warm". In this manner, the user may interact in the link service environment by creating or editing objects, establishing or modifying data links, changing data and the like during a session without changes to a particular object or subobject manifesting themselves in related objects or subobjects until an affirmative desire to do so is indicated by the user.

Still referring to Fig. 3 yet additional features of the invention will be herein described in general terms to facilitate a more detailed description of the operation and function of the invention which follows. The illustrative collection of objects or subobjects and links as shown in Fig. 3 may be referred to as a "packet". In accordance with the invention a user may desire a logical break for differing sets of such links and objects which may be broken up or organized arbitrarily by any of a plurality of factors. For example, the user may establish a number of such packets distinguished in the sense that each is created for a different function. It is integral to the invention that all such packets are saved in permanent storage for subsequent recall and interaction which might include navigating the links for data retrieval, editing thereof to establish new logical relationships or changing data which may effect changes in other related objects or subobjects in the case of the aforementioned data links.

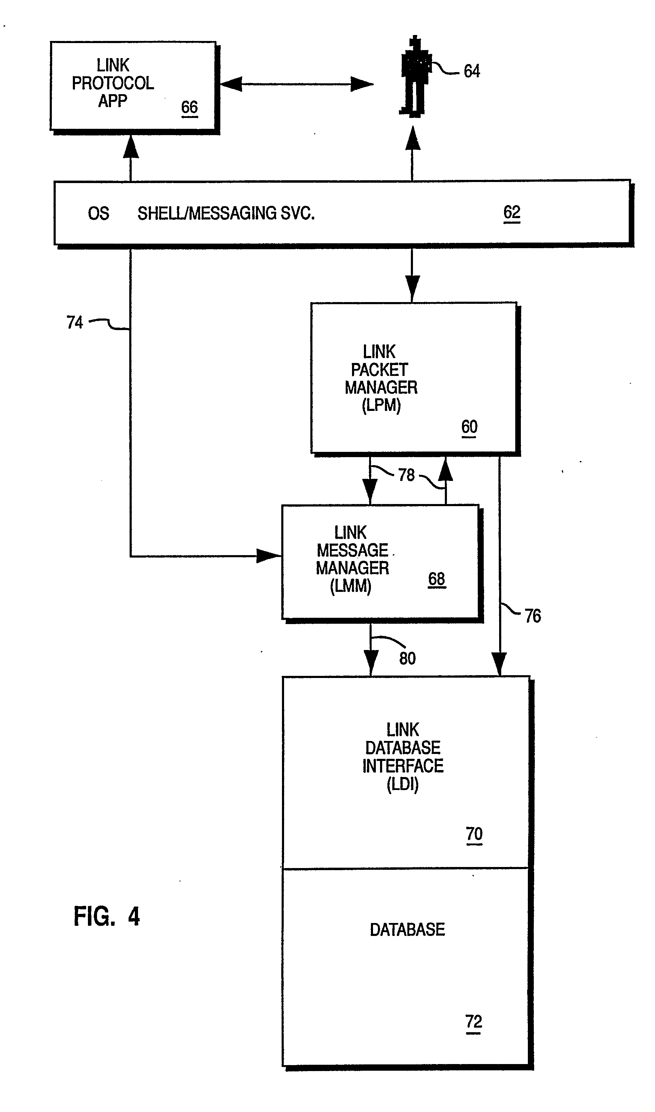

In Fig. 4 there may be seen a functional block diagram depicting the link service architecture or module of the present invention. First the overall functions of major components thereof will be described followed by more detailed disclosure including the interrelationships and interworkings of the various components. As indicated in Fig. 4, the architecture is comprised essentially of a link packet manager (LPM) 60, shell 62, link message manager (LMM) 68, a database 72 and a link database interface or LDI 70.

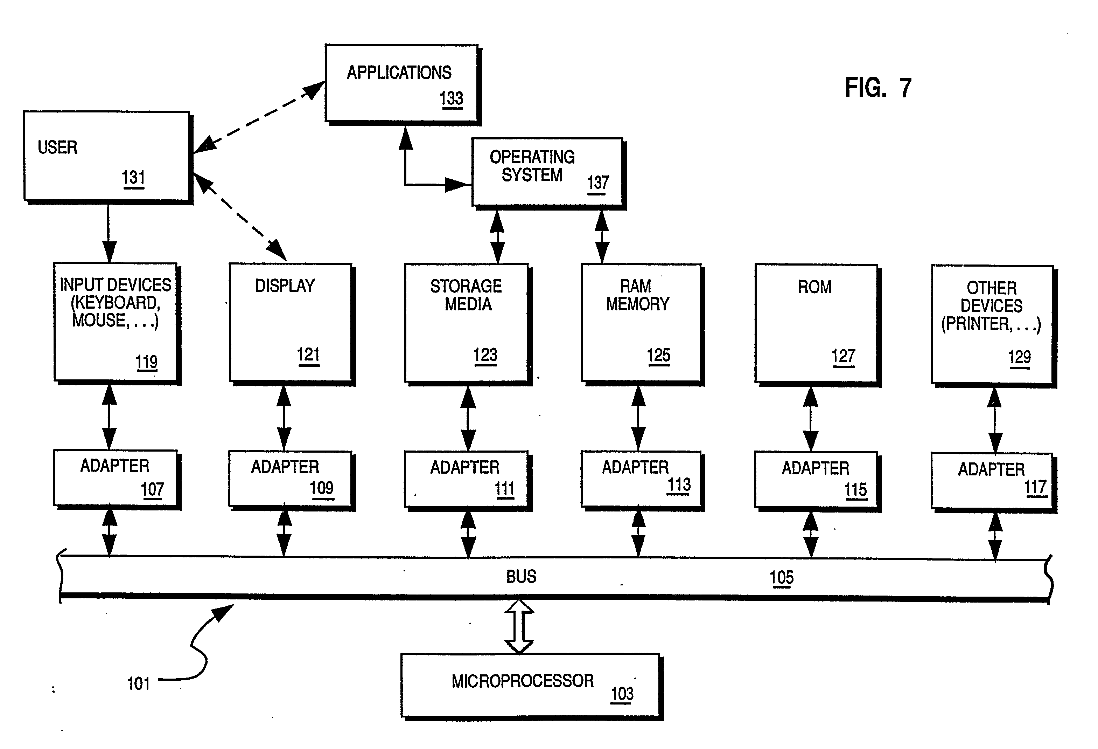

Taking the LPM 60 first, this module through the shell 62 provides numerous interfacing functions between the invention and the user 64. The function provided by the shell 62 is common to operating system services currently available in the market place. The dialog services provides a facility for an application to interact with an end user 64 via a computer display such as display 121 of Fig. 7. The messaging service handles the routing of messages among applications and system services providing a mechanism for various applications and system services to communicate with each other.

The LPM 60, with associated conventional display technology well known in the art, effects the visual display of preselected packets depicting graphically the links thereof and displaying all links emanating from a particular object. This permits the user 64 to select one so as to facilitate following the interrelated objects and subobjects thereof by means of the displayed links. The LPM 60, more particularly, generates displayed queries to the user 64 to supply keywords and descriptions for links and packets during their creation and thereafter, and essentially provides a graphical user interface to facilitate the searching for links, subobjects, objects, and packets. The LMM 68 is employed by the LPM 60 as indicated functionally by the interconnection 78, to communicate with applications on either side of a link and further uses the LDI 70 for the storage and retrieval of packets in the database 72 as indicated by the flow line 76.

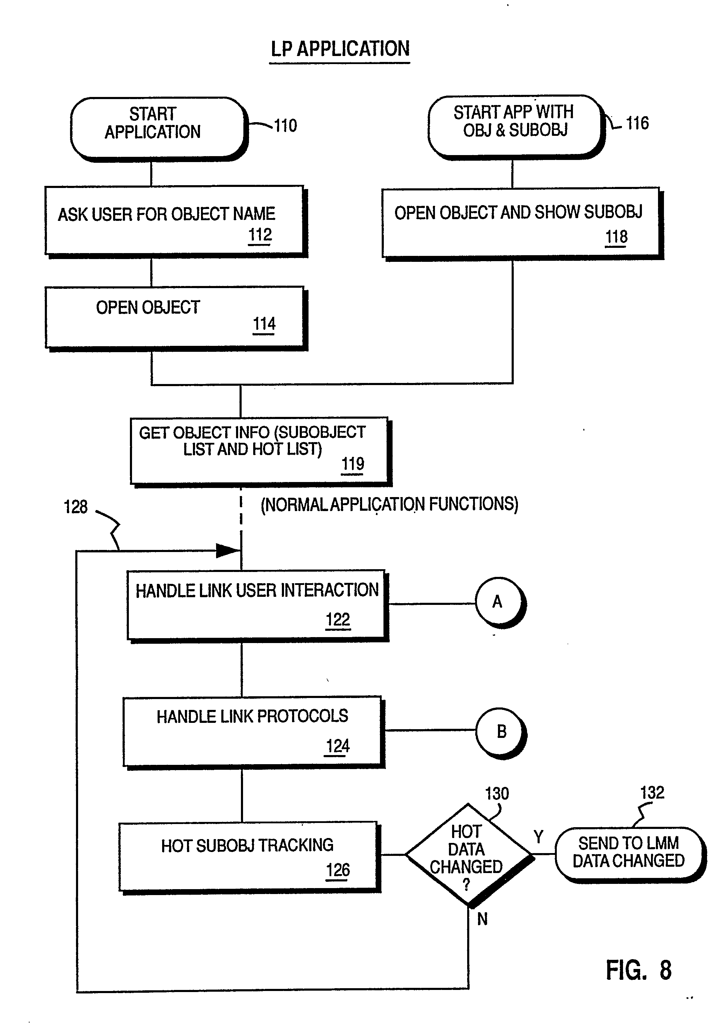

Referring now in more detail to the LMM 68, this module or component of the overall link service architecture, performs numerous functions including the sending to/receiving from applications 66 and processing of link protocols as functionally indicated by interconnection 74. These protocols will be discussed in greater detail with reference to Table 1 and Figs. 8-13 which follow.

Still further, the LMM 68 performs data format negotiations and routing between applications on either side of a link and employs the LPM 60 to provide communication between the system and the user 64 when necessary (as, for example, in the case of querying a user to select a particular link when more than one is available). Moreover, as indicated by the functional flow line 80, the LMM 68 further utilizes the function of the LDI module 70 in order to store and retrieve links and/or packets in the database 72.

With reference now to the functions of the LDI 70/database 72, the LDI 70 performs functions of retrieving and storing packets, searching for links and packets, and managing the cache for packets for optimal link service performance. Still further, the LDI 70 translates the aforementioned link protocol messages from the LMM 68 represented by the flow line 80 into appropriate database calls from the LDI 70 to the database 72. The database 72 may be a simple file system such as that of the OS/2 Standard Edition Release 1.1 of the IBM Corporation or a sophisticated database management system such as that provided in the OS/2 Extended Edition Release 1.1 of the IBM Corporation.

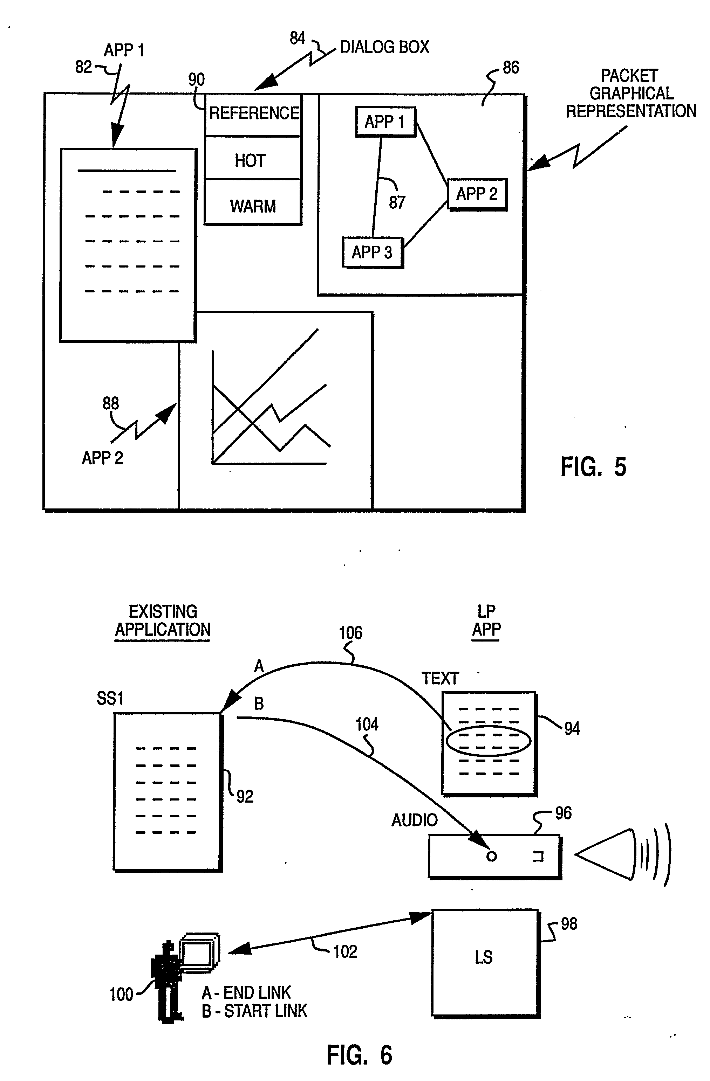

Fig. 5 illustrates in a pictorial and schematic way the manner in which the user 64 may interface with the system of the present invention to create a link. Depicted in the dialog box 84 of Fig. 5 is an illustrative visual display which might be presented to and perceived by the user 64 on display 121 of Fig. 7 during a typical scenario in which a link is created. Shown generally in Fig. 5 is an indication of a function being performed by a first application 82 such as a text processor; the function of a second application 88 such as a graphics package; a graphical packet representation 86 illustrating the interrelationships established between the applications such as 82 and 88 effected by the link packet manager or LPM 60 hereinbefore described; and, finally, a window 90 whereby the user 64 may input desired indications or receive indications as to the various characteristics of particular links, i.e., whether such links are reference or data links and whether they are warm or hot. The graphical interface depicted in Fig. 5 is intended to be illustrative only and in no way limits the scope of the invention. For example, with reference to the window 90 it will be readily apparent that while the user 64 might indicate therein by means of a pointing device with respect to a particular link and its characteristics, the invention admits to any number of ways of conveying this information and prompting for user input such as by means of command line input or the like.

Still referring to Fig. 5 in the creation of a link in accordance with the invention the user 64, by means of any convenient input device to the system and in response to a prompt to the user of desired, would identify a desired subobject and further indicate to the system a desire to start a link. In response thereto, a corresponding application such as application 1 shown conceptually at reference numeral 82 would generate a startlink protocol which would then be conveyed to the link service of the present invention. In like manner, the user 64 might then further identify a next subobject and designate by appropriate I/O a desire to end a link, whereupon the endlink protocol message as described with reference to Table 1 would also be transmitted to the link service system of the invention by the second application 88. The link service or LS would then generate appropriate messages corresponding to the link protocols of Table 1 prompting the user for link types and link attributes in response to which the user would specify through the I/O link between the user 64 and the link service of the invention the requested link type and link attributes. These are provided back to the LS by means of appropriate protocol messages of Table 1.

In response to the these received link type and attribute specifying messages, the LS performs the function of format negotiating between the applications 82 and 88 and initiates the start of data exchange wherein, for example, the first application 82 provides data which is received by the second application 88. The LS will thence display an indication of the link and its attribute in the dialog box 84. This might include a graphical line 87 interconnecting the applications 82 and 88 which might be highlighted or otherwise indicated for example in window 90 as signifying that the link just created was a hot or warm data link.

Fig. 6 is intended to indicate the function contemplated by the invention wherein the link service is intended to provide at least limited support to existing applications. Now with reference to Fig. 6, an existing application 92 may be used as the start or end of a link. Such application 92 must support only one characteristic generally satisfied by many applications existing in the market place, namely the support for an invocation which allows an object or subobject to be referenced and displayed as part of the invocation. The participation by application 92 is limited to reference links, and the user 100 must interface through the link service 98 directly to create the spreadsheet 92 portion of the link. This interaction is provided by the link packet manager LPM 60 of Fig. 4 and is shown as functional interconnection 102 of Fig. 6. In Fig. 6, the existing application 92, such as a spreadsheet, may be an endlink for a text application 94 as depicted by link 106 or a startlink for an audio application 96 as indicated by link 104. In this example since both applications 94 and 96 support the link service protocol, the user 100 may reference the spreadsheet 92 from either application subobject during execution. The only way however, to reference either application 94 or 96 from the spreadsheet is through the use of the graphical representation provided by the LPM 60 of Fig. 4. Applications 94 or 96 may not be referenced directly from application 92 during execution. Neither application 94 nor 96 has to support the protocol for a link to be created as indicated in Fig. 6, however, in that case the restrictions discussed above would apply to both sides of the link.

In Fig. 7 a functional block diagram illustrates apparatus for implementing the environment of the invention. In the computer system environment 101 depicted therein, a microprocessor 103 intercommunicates by means of a bus 105 with a plurality of adapters 107-117. The bus 105 is only illustrated generally and intended to represent any conventional bus structure comprises of data, control, and address signals for effecting the intercommunication between the microprocessor 103 and the adapters 107-117. Each adapter has associated interconnected therewith a device such as those shown at reference numerals 119-129. The input devices 119 block is intended to represent any number of such devices well known in the art for receiving input from a user 131 such as a keyboard, mouse, touch screen, or the like. The display 121 is intended in the conventional sense for conveying graphical images such as those represented generally in the other figures to the user 131 such as displays of packets, objects, subobjects and their links either as they are selected or edited by the user 131 or as retrieved in accordance with the invention. Storage media 123 is intended to represent any bulk storage media as desired which may take the form of disk or tape drives, or the like. This media 123 will be used to permanently store the links described previously. RAM memory 125 is further provided in the system 101 for conventional purposes and will be used by the invention to cache the packets. ROM memory 127 is also included which may take the form of CD ROM or the like. Block 129 is intended to indicate that other output devices may be included in the system 101 for implementing the invention's function as hereindescribed such as a printer for hard copy of any I/O between the system 101 and the user 131.

The system is further provided with an operating system 137 which (under control of the microprocessor 103 through the bus 105 and respective storage media 123-adapter 111 and RAM 125-adapter 113 pairs) performs the functions normally associated with conventional operating systems as well as including function required herein with respect to the link services as well as the link service itself. The functions which the time service is dependent upon include a file system or database manager, a dialog facility and messaging facility. The file system or database manager is used by the invention to facilitate the storing of links/packets. The system 101 is intended to operate with one or more applications 133 which may or may not be object oriented programs and may be either link protocol type programs to participate fully in the benefits of the invention or, in the alternative, may be non-link protocol applications. As to the later and as will be hereinafter described in more detail, even such non-link protocol applications may at least enjoy some limited participation in the environment.

The architecture and function described herein relative to the invention and depicted as the generalized view of Fig. 7 may be implemented in terms of hardware support by a number of computer systems such as the configuration used in the IBM Personal System/2 family of computers which may include an Intel 80286 or 80386 or similar microprocessor 103. The display 121 in such a system might for illustrative purposes be an IBM Personal System Color Display 8514 in which the correlative adapter 109 is integrated into the planar board. The various other devices depicted in Fig. 7 may either typically be included as part of the system such as the IBM Personal System/2 or may be available alternatively as plug-in options.

The read only memory 127 in such a system may be recognized as including the basic input/output operating system or BIOS which controls the fundamental computer operations. As will be understood by those skilled in the art, the operating system 137 may be comprised for example of the operating system OS/2 Extended Edition Release 1.1 with associated additional function herein described. The following reference manuals which are herein incorporated by reference, provide further detail as to a preferred embodiment of the system 101: Technical Reference Manual Personal System/2 (Model 50, 60 Systems), IBM Corporation, Part No. 68X2224, Order No. S68X-2224; Technical Reference Manual, Personal System/2 (Model 80), IBM Corporation, Part No. 68X2256, Order No. S68X-2256; IBM Operating Systems/2, Version 1.1, Standard Edition Technical Reference, IBM Corporation, Part No. 6280212; and The Iacobucci, Edward OS/2 Programmer's Guide, McGraw Hill, 1988.

With reference to Fig. 8 now, an application such as a word processor will be started at 110 whereupon an object name such as a document name or the like is requested at 112 from the user and the thus-specified object thereby opened at 114 by the application. Alternatively the application may be started with a predetermined object and subobject shown at 116 whereupon the object and subobject are opened and displayed by the application, respectively, indicated at 118. For example, in this manner a particular predetermined document might be opened with a predefined paragraph thereof being displayed. Alternatively, this right hand branch for opening an object is used when the link service invokes an application.

When a link protocol (LP) application is thereby started, the link message manager (LMM) of Fig. 4 is called by the application to obtain all the object information associated with the object at 119. This call will be in accordance with link protocols to be discussed in greater detail with respect to the accompanying Table 1. A list of all the linked subobjects within that applications object and their associated hot links is then also obtained at 119 from the link service (LS) whereby they may be kept track of by the particular application in order for the application to provide visual feedback to the user as to subobjects having links and to inform the link service of any data changes to subobjects having hot links, regardless of whether or not the packet to which they belong is active. The user may then, for example, indicate with a pointing device (such as clicking with a mouse on subobjects highlighted) that the subobjects have links whereupon the links may be displayed. The application will then continue performing the normal functions of the application whether it be a spreadsheet, word processor, etc.

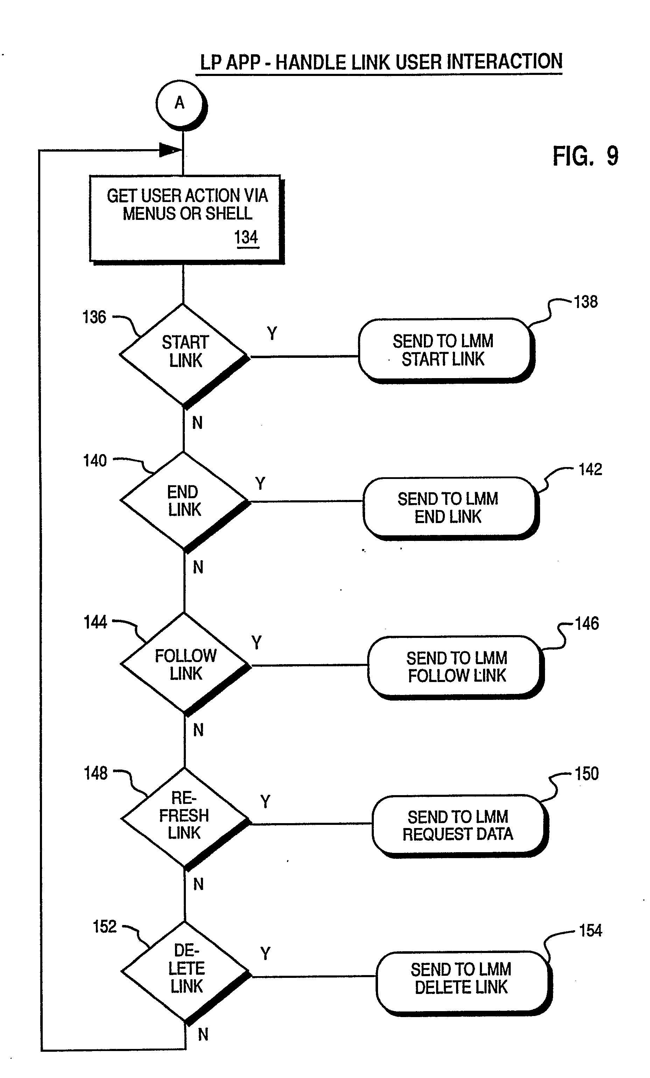

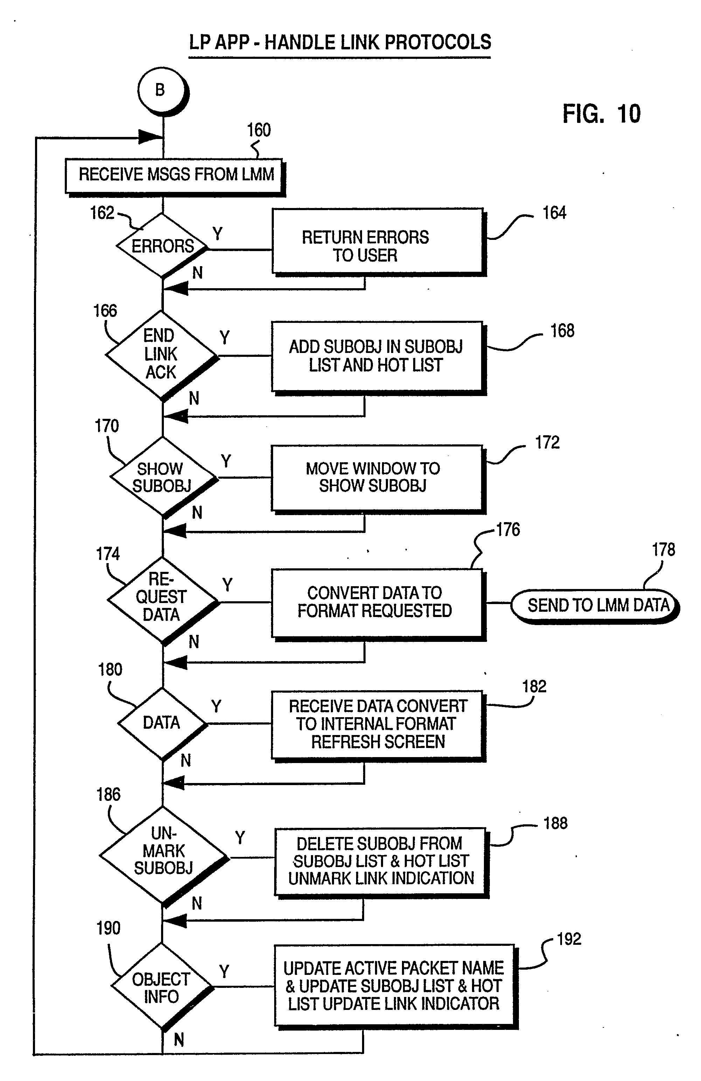

In addition to handling normal application functions, there are several other functions an LP application must handle shown generally at 122-132. These include handling link user interaction 122 in terms of specifying details related to the links (explained in further detail with reference to Fig. 9), handling protocols, 124, coming from the link message manager 68 in Fig. 4 (described in greater detail with reference to Fig. 10) and handling the tracking of hot subobjects, 126. It will be recalled that with respect to the previously described link concept that there may be various types of links such as hot links whereby when the respective subobject changes, data resultant from the change flows automatically through the links connected to that subobject to other applications or objects.

Accordingly, the function at 126 indicates that after an LP application receives indication at 119 that subobjects exist which must be tracked (in that they contain links and particularly hot links), these hot subobjects will be tracked at 126 and specifically checked at 130 to determine whether any data associated with the hot links has been changed. If so as indicated at 132, a "data changed" message is sent to the link message manager (LMM). If hot subobject data has not changed, control loops back as shown at 128 whereupon the application continues with normal application functions as well as those to be described with reference to 122-126 in a looped fashion.

With reference to Fig. 9 now, this is a detailed flow diagram of one of the functions which the LP application must perform shown at 122 of Fig. 8, namely handling link user interaction. At 134, the LP application may receive indications of user actions 136, 140, 144, 148, and 152 via user interaction through the user interface services of the shell or the application itself. User interface shell extensions in the operating environment could include the just-described linking functions (136-152) so that each application need not contain facilities for the link functions. In this case, the application would simply obtain indications of user actions from the shell. Thus, for example, with reference to the start link action 136 of Fig. 9, the shell could handle the user interaction to select this start link function whereupon the application is informed via a message from the shell that there is a start link which must be handled by the application. The application, in turn, after learning of the link being started, would then send to the link message manager (LMM) a start link message 138. The parameters for "start link" would be sent in a message including information about the subobject, identified prior to occurrence of the start link. For example, with respect to

8

a spreadsheet, the user would identify an area of the spreadsheet by name which would be sent upon start of the link to the LMM at 138.

Once the application has sent a call to the LMM at 119 of Fig. 8 and thereby obtained the information associated with the object, it is then able to transmit to the LMM (at 138 of Fig. 9) the start link message including the active packet name. For each action 136-156 of Fig. 4 relating to the user interaction, the user action selected will be sent along with the packet name.

In summary then, in response to a received user action at 134 (to start link 136, end link 140, follow link 144, refresh link 148, or delete link 152, various protocol information as indicated in the Table 1 corresponding to the associated indicated user action will be sent to the LMM (start link protocol data 138 in response to start link user action 136, end link protocol data 142 in response to end link user action 140, follow link protocol data 146 in response to follow link user action 144, request data protocol information 150 in response to refresh link user action 148, and delete link protocol data 154 in response to delete link user action 152.

With respect to the specific user actions 136-152 of Fig. 9, further detail as to the nature of these actions is helpful. A link is created by the user actions of a "start link" 136 and "end link" 140. However, with respect to the "follow link" 144 indicated user action, this refers to the LP application function wherein the particular subobject in the application is selected and it is desired to follow an existing link to the other objects and subobjects to which the selected subobject is linked. The "follow link" results in the linked object and subobject being invoked and displayed.

In response to the protocol sent at 146 relating to the "follow link", the LS handles all follow link actions itself. In this case the applications only responsibility is to indicate the user action by sending the "follow link" message.

With respect to the "refresh link" user action 148, this refers to situations in an LP application wherein a subobject in the application was linked to a subobject in another such application and the link was designated as "warm". A "warm" link, it will be recalled, means that the subobject does not automatically flow between applications when the data changes, in contrast to hot links previously discussed. When a user is looking at the end of a link and desires to see up-to-date data relating to a specific subobject, this is when the refresh link user command 148 comes into play. In response to such a "refresh link" indicated user action, the LP application sends the "request data" protocol message to the link message manager (LMM) which in response thereto effects such refreshing.

When a user desires to delete a link as indicated by the "delete link" user action 152, the application sends a "delete link" message in the corresponding protocol defined in Table 1 to the LS as shown at 154.

As indicated from the looping out from 152-154 back to the entry point 134, this process is continuously repeated of repetitively scanning for all indicated user actions 136-152 and handling thereof by way of the application sending protocol messages 138-154 to the LMM.

In summary then, with respect to the user actions, it should be apparent that the "start" and "end" link actions 136 and 140 are associated with creating a link. The "follow" and "refresh" link actions 144 and 148, respectively, relate to use of the existing links, and the "delete" link action 152 indicates a desire to change a link.

With reference now to Fig. 10, the detailed flow diagram indicates the manner in which an LP application processes link protocols as shown generally at 124 of Fig. 8. It will be recalled from previous discussion with reference to Table 1 that such protocols refer to information sent either from the LS to the LP application or vice versa and that the LP application must be designed so as to handle such protocols. As indicated at 160, the link message manager (LMM) will send LP messages to the LP application. The protocol includes specific LP application IDs (indicated as "object type" in the parameter list of the protocol messages in Table 1) which identify whether such messages are intended for the particular LP application. As a result, once the application has thereby determined that particular link messages are intended for the particular LP application, the application will first determine what the message is inasmuch as there are a number of possible messages such as those indicated in Fig. 10 as 162-190.

One message which the LP application scans for is whether there are errors returning from the link service as indicated by the error decision block 162. If the application determines that errors exist, the application would return the indications of the particular errors to the user at 164 enabling the user to take appropriate corrective action. Such errors typically might include indications of incorrect parameters or non-existence of links for example.

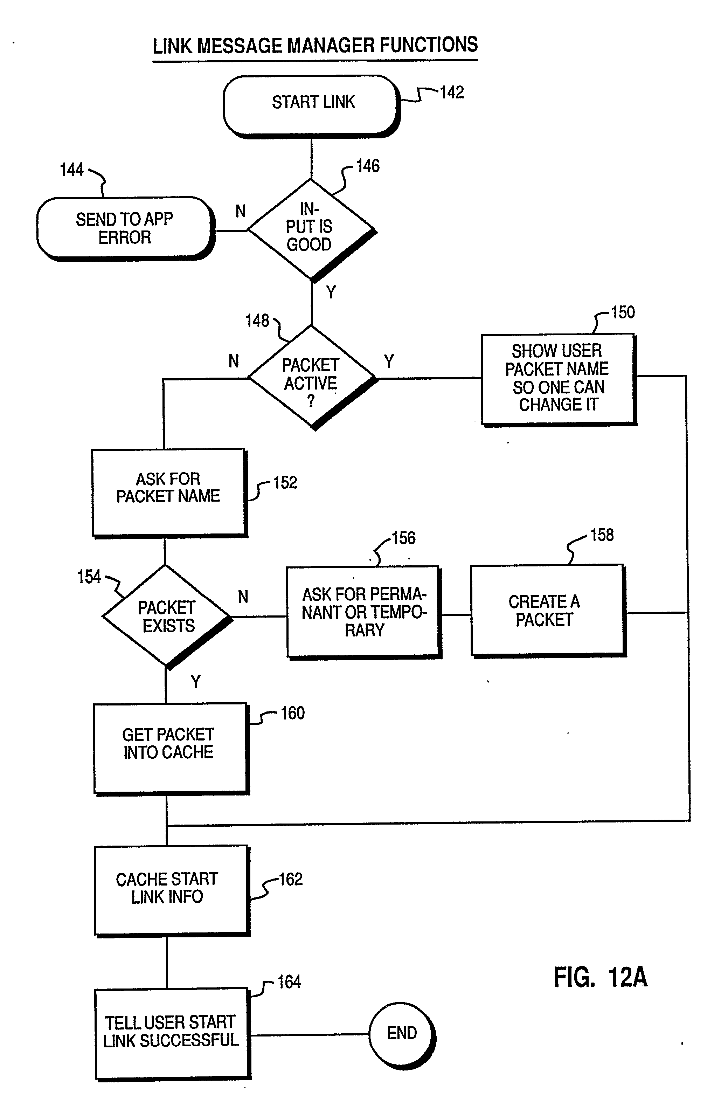

Still referring to Fig. 10, it will be noted in passing that the particular messages 162-190 being depicted in the process of Fig. 10 are being sent to the application by the LMM, while the LMM is performing the specific functions more particularly described hereinafter with reference to Figs. 12A-G. Thus, for example, the "error" being sent to the application at 144 in Fig. 12A by the LMM corresponds to the error received by the application at the block 162 of Fig. 10.

Continuing with the protocols received and handled by the LP application in Fig. 10, when the LP application receives an "end link" acknowledgment 166 from the LMM, this indicates that two applications have successfully performed a start and end link. In response to such acknowledgement 166, the application will add the subobject which was passed back on the end link acknowledgement 166 into the subobject list and hot link list, if appropriate, that the application is maintaining, as shown at 168.

With reference to the steps 166-168, and referring back to Fig. 8 at step 119, it will be recalled that at this step 119 the application needs to obtain and subsequently maintain lists of both the subobjects being linked as well as designated hot links which are obtained from the LMM at 119 each time an object is opened within the application. From that point on the lists are accordingly updated by the steps 166-168 of Fig. 10 when a link is established.

Another LMM message to be handled by the LP application as shown in Fig. 10 is the "show subobject" message 170. This is sent by the LMM to the LP application in order to cause an already active application to display a particular subobject as a result of a user indication of a desire to follow a link. Thus, the application includes a decision function 170 to determine whether such a message has been provided by the LMM. In response thereto, the action taken by the application at 172 is to show the object by moving the window for presentation to the appropriate location to display the subobject, as indicated at 172.

Continuing with Fig. 10, yet another message from the LMM to the LP application is a "request data" message, the presence of which is detected by a decision process in the LP application indicated at 174. In response to the application detecting the presence of such a message from the LMM, the action taken by the application is to convert the internal presentation data to the format requested and specified in the "request data" protocol message, as shown at 176. The LMM knows the desired data format negotiated at start/end link time, when the "request data" message is sent, and the application is simply responsible for converting the data into that requested format. Once the data has been reformatted, a message is sent to the LMM indicating availability of the reformatted data and it is transmitted to the LS at 178.

When the LMM sends a "data" message to the LP application, thereby indicating the application is at the receiving end of a link and that data will be flowing to it, the application will receive the data and analyze the format indications on the data message and convert the data to the application's internal format, whereupon the application refreshes the screen. Thus, the detection of "data" message by the application is indicated at 180 and the data conversion and screen refresh steps are performed at 182.

The application will also detect an "unmark subobject" message at 186 from the LMM. This corresponds to a user action initiated from the other end of a link indicating the user desires to delete the link. In this case the subobject must thus be unmarked since it is no longer to be referenced by a link. Accordingly, the action taken at 188 by the application is to delete the subobject from the subobject and hot link lists being tracked and also to disable the visual link indicator of that subobject.

It will be recalled that the block 119 of Fig. 8 indicates the acquisition by the application of the subobject and hot link lists from the LMM when the initial object is opened within the application. The functions 190 and 192 of Fig. 10 however indicate steps which must occur by the LMM and the LP application when a user desires to work with an object different from that which was initially specified at block 119.

It is also possible that an application utilizes the notion of an active packet in a special way to visually differentiate the active packets subobjects from other subobjects. In such a case, the link packet manager (LPM), which is used to change the active packet, will generate a message to applications which are currently active, indicating that information relating to active subobjects has changed. The applications then, in response to such a message transmitted from the LPM through the LMM to the applications, may update the visual link indications, as indicated at 192.

If the application does not detect a message from the LMM indicating that the application must perform the just-described functions of block 164-192, the application will exit the lower "no" path at block 190 looping back to the block 160 to repeat the hereinbefore described analysis of messages received by the application from the LMM.

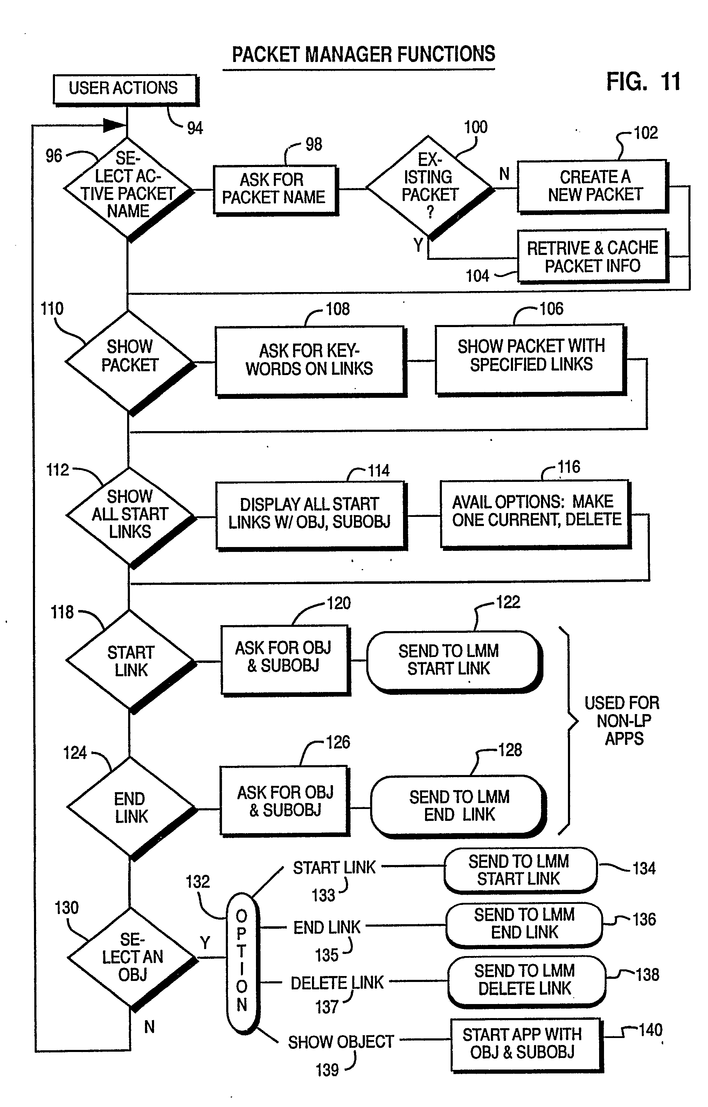

Fig. 11 is a detailed flow diagram of the functions performed by the link packet manager (LPM). indicated in Fig. 4. The LPM processes and handles all direct user interactions with the link service whereby displays of the actual visual indication of a packet may be effected. This indication is in one form preferably a visual image on the screen of the plurality of subobjects associated with the packet, as well as visual indications depicting links interconnecting subobjects as pre-specified during previous interactions with the various applications. The user may further preferably be able to designate from the visual packet display those subobjects and associated links with which the user desires to work. The LPM will first acquire the indication of desired user actions from the keyboard, pointing, or other input device, as to the specific actions which the user desires to take with respect to the selected subobjects and links. Such actions include those specifically shown with reference blocks 96, 110, 112, 118, 124, and 130 of Fig. 11.

When the LPM detects at 96 that the user action has indicated a desire to select a packet, the LPM generates a message at 98 querying the user for the desired packet name. Upon the user specifying a desired packet name, the LPM determines at 100 whether the specified packet name corresponds to an existing packet. If the packet is not already in the system, the LPM will create a new packet at 102. If the packet is already existing in the system, the LPM will retrieve and cause the caching of the packet at 104. In some cases, a user may wish to view a packet. The "show packet" user action, indicated by 110 in Fig. 11 provides such a function.

In some instances a packet may be rather large with numerous subobjects and links. In such instances it may be desirable to provide a more simplified indication of the overall link structure or a more detailed view of a particular portion of the links the user is interested in. Thus, the LPM will accept as indicated at 108 user provided keywords to filter links. The LPM then attends to generating commands so as to cause the display of the links having the key words only, 106. Thus, in a packet having numerous links, only those links are displayed satisfying the key words so the user may concentrate on them and determine if they are desired links, thereby simplifying the graphical packet display.

It is also desirable to enable a user to start several links without requiring the user to start and end one link at a time. For example, a user may desire to go to one or more applications and start more than one link and subsequently complete a particular link from start to end. The steps 112-116 provide a convenient means for doing so. When the LPM detects a user action at 112 indicating a desire to show all start links, the LPM generates necessary messages to cause the display of all such start links together with their correlative objects and subobjects at 114. At 116, the LPM queries the user to indicate whether it is desired to delete a start link and/or specify a displayed start link as being current. There are several advantages to the packet manager providing these functions. For example, if one start link is made current several end links may be specified whereby one start link may be linked to multiple end links very readily. Moreover, with several start links, different ones can be made current at 116 at different times so as to associate them with the desired specified end links.

An alternative to invoking this function explicitly is the case in which the user has indicated multiple start links and then chooses an end link. In this case the list of start links will be displayed automatically and this function invoked implicitly. Also, if only one start link exists when an end link is selected this function will be bypassed.

In Fig. 9 it will be recalled that functions are specified at 136 and 140 to be performed by the LP application in starting and ending links. In contrast, with reference to Fig. 11, these start and end link functions 118 and 124 are specified by the user through the link packet manager (LPM) and are accordingly LPM functions. The significance of this is that for non-LP applications, such as that schematically indicated in Fig. 6, it is the LPM rather than the application which will support these functions specified by the user in starting and ending links at 118 and 124 of Fig. 11, respectively. Thus, for "start link", when the LPM determines at 118 that this is the desired specified user action, it generates the appropriate messages requesting specification from the user of a desired object and subobjects at 120 whereupon the information provided by the user in response thereto is sent to the LMM as indicated at 122. In like manner, once the LPM determines an end link is desired at 124 in response to the user action 94, messages at 126 to the user request specification of the object and subobjects, and user responses thereto are also sent to the link message manager (LMM) as indicated in Fig. 4 at 128.

Yet another user action 94 which is detected by the LPM at 130 is the selection of an object from the graphical packet displayed on the monitor. In this case, as indicated by the options 132, the user may provide user actions in response to visual user prompts to start a link, 133, end a link, 135, delete a link, 137, or show an object, 139. Again there is a distinction between these start and end link actions 133 and 135, respectively, and the start and end link steps 118 and 124, respectively. Link actions indicated in 118 and 124 are used for non-LP applications the first time a specific object or subobject is used in a link. However, for an object or subobject that already exists in a packet it may be more convenient for the user to interact directly with the graphical packet representation. Such actions are indicated by steps 133 and 135. Whether an LP or a non-LP application, the object would appear in the graphical packet displayed on the monitor so that the user may cursor to the particular object on a visual display and select it at 130. The option 132 thus indicates that upon the user action indicating a desire to start, end, or delete a link, 133-137, a correlative message 134, 136, or 138 is sent to the LMM to start, end, or delete a link, respectively.

With respect to the user action of indicating to the LPM a desire to show an object, 139, the action taken by the LPM is to send a call to the application to start it with the particular designated object and subobject as indicated at 140. If there are multiple links associated with a particular object, the first link into the object will be selected with the subobject corresponding thereto being displayed. This functional step 140 corresponds to step 116 of Fig. 8 previously described.

Referring now to Figs. 12A-12G, these diagrams indicate the functions performed by the link message manager (LMM) when various messages hereinbefore described with reference to the preceding figures are received. Referring first to Fig. 12A, this diagram refers to the sequence of functions performed by the LMM upon receipt of the start link message 142. First, the LMM checks to see whether the input is good at 146 inasmuch as there are a number of parameters being passed. If errors are detected, this is indicated to the application by an error message at 144. If the input message is good, at 146 the LMM determines whether the packet identified in the start link message is active, at 148. If no packet is active, the LMM transmits a message to the LPM causing a request to the user for the packet name as indicated at 152. Upon user-specification of the packet name, the LMM makes a check of whether the packet name thus specified exists at 154 in which case the packet is fetched and placed in cache at 160.

If the check at 154 indicates the packet does not exist, the LMM calls the LPM to generate a message requesting user action to specify at 156 whether the packet the user just specified a new name for at 152 is permanent or temporary. If temporary, the packet is discarded at the end of a user session whereas if designated as permanent in response to the step 156 query, it will be permanently saved. Regardless of whether permanent or temporary, data structures will have to be created and the packet will have to exist for the duration of the work in the cache and thus a cache structure for a packet is created at 158.

Returning to step 148, if the LMM determines that the packet is already active, as indicated at 150, the packet name is displayed and the user may change the active packet if desired so that a different packet may be worked on at that point.

At 162, the link service recalls the start link information previously stored in cache and then at 164 provides an indication through the LPM that the start link user action was successful. This start link is stored to enable the LPM to indicate to the user at 112 of Fig. 11 all of the existing start links.

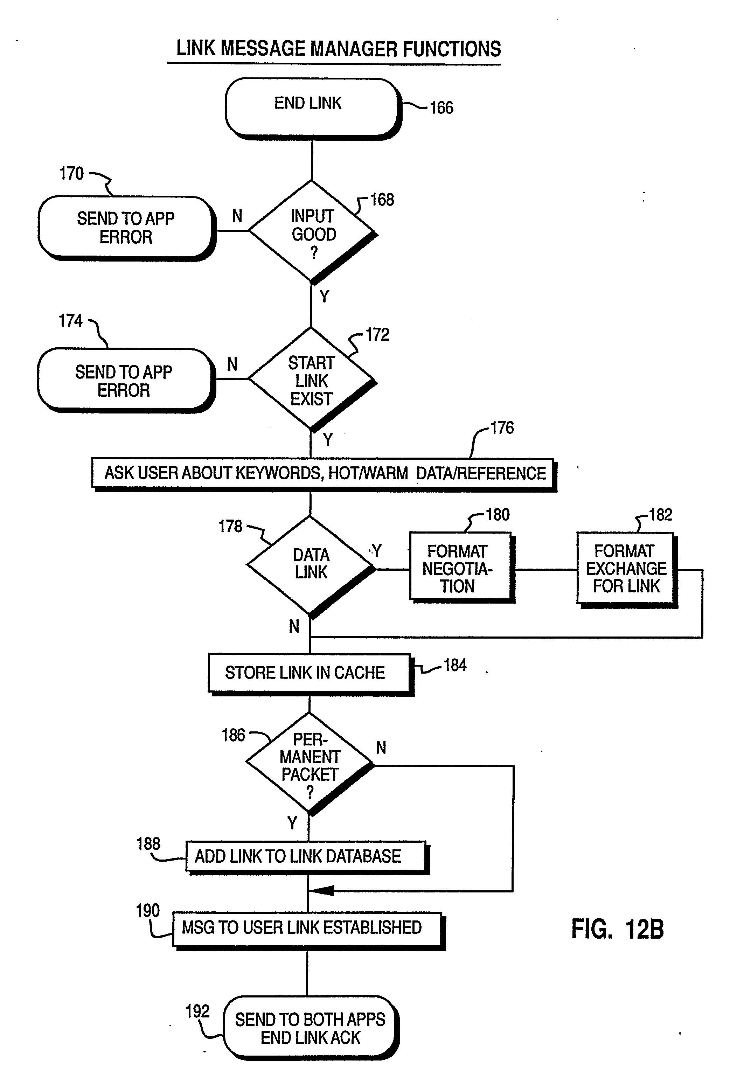

In like manner to Fig. 12A, Fig. 12B indicates the functions performed by the LMM in responding to the hereinbefore described end link message 166 upon receipt of such message by the LMM. As with the actions in response to the start link command, a check is made at 168 to determine whether the end link message is good and if not an error message 170 is transferred to the application. Next, the LMM checks to determine whether a start link exists at 172. Recall that at step 162 of Fig. 12A, the start link information is stored whenever the user does a start link. Thus, at step 172 of Fig. 12B, the LMM will check the cache memory structure to determine whether a start link exists. If a start link does not exist, an error message 174 indicating this situation is transferred to the application. If in response to the start link check, a link currently exists and thus an end link may be performed, at 176 the user is queried for additional information associated with the link. Recall discussion concerning multiple start links indicated in Fig. 11 step 114, the LPM will interact with the user to choose a current start link. Specifically, the LPM requests the user to provide keywords so that the LPM may perform link filtering as indicated at 106 of Fig. 11. The user is also requested to specify whether the link is hot or warm and whether the link has data or is simply a reference link. If it is a data link as determined by the LMM at 178 from the user response at 176, the LMM will perform format negotiation at 180. This step basically involves the LMM determining the proper data format to be used for this particular link. The start and end link LP applications each provide a prioritized list of data formats supported for the LMMs use. The function of box 180 is for the LMM to determine a mutually compatible format from the possibilities indicated in such lists.

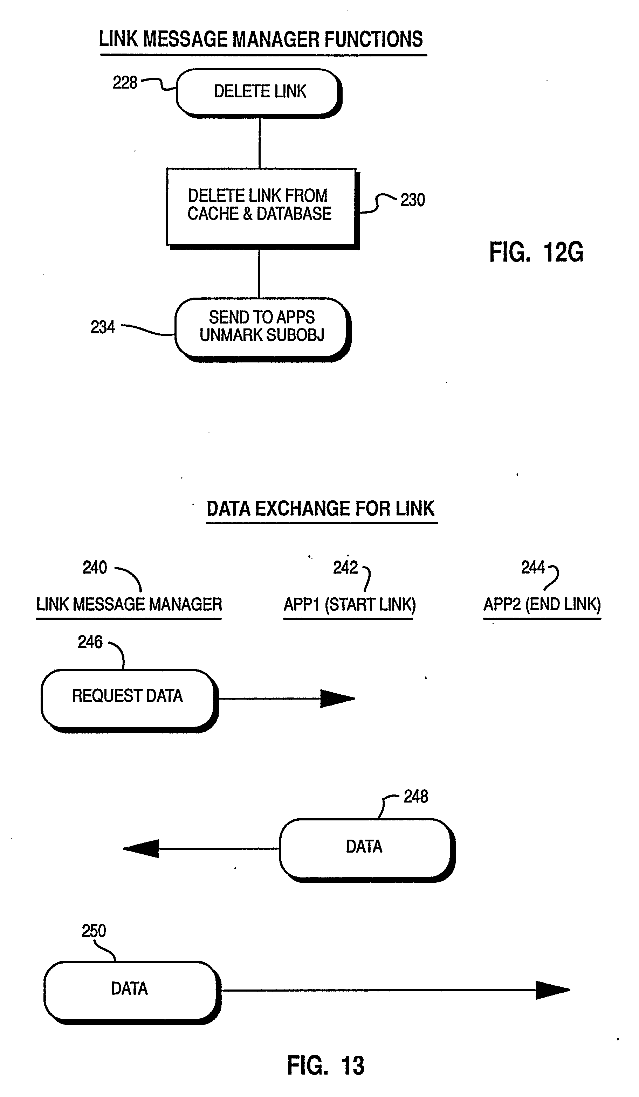

The function 182 indicates that after format negotiation 180, the LMM will cause data exchange to occur which involves several protocols between the application and LMM as indicated in Fig. 13. Basically with respect to this function and with brief reference to Fig. 13, the LMM will send a request data message 246 to the first application 242 whereupon the application 242 will return data at 248 to the LMM 240. Thereafter, the LMM 240 will send the data at 250 received from the application 242, corresponding to the data 248, to the second application 244. Thus, the function 182 actually represents three flows of data, i.e., the request data message 246 from the LMM 240 to the first application 242; transmission of the data 248 of the first application 242 in response thereto back to the LMM 240; and, finally, further transfer of this data 248 as data 250 to the second application 244. In this manner, data is successfully passed from the beginning of the link in the first application 242 to the end of the link at the second application 244.

Referring again to Fig. 12B, with the link established by inclusion of the end link user action, the completed link is then stored in cache, 184 as well as all the information related thereto obtained at 176, i.e., keywords, and whether the link is hot, warm, a data, or reference link. Next, the LMM performs a check of whether the packet is permanent at 186. If it is, the link is added to the link data base, 188, and if not this data base addition step is simply bypassed and no permanent storage is performed, although temporary storage is provided in the cache. Next, at 190, a message is sent to the user by the LPM indicating establishment of the link. The DLS will also send a message (as indicated at 192) to both applications acknowledging that the completed link has been established. Each application will then handle this message as indicated at 168 Fig. 10.

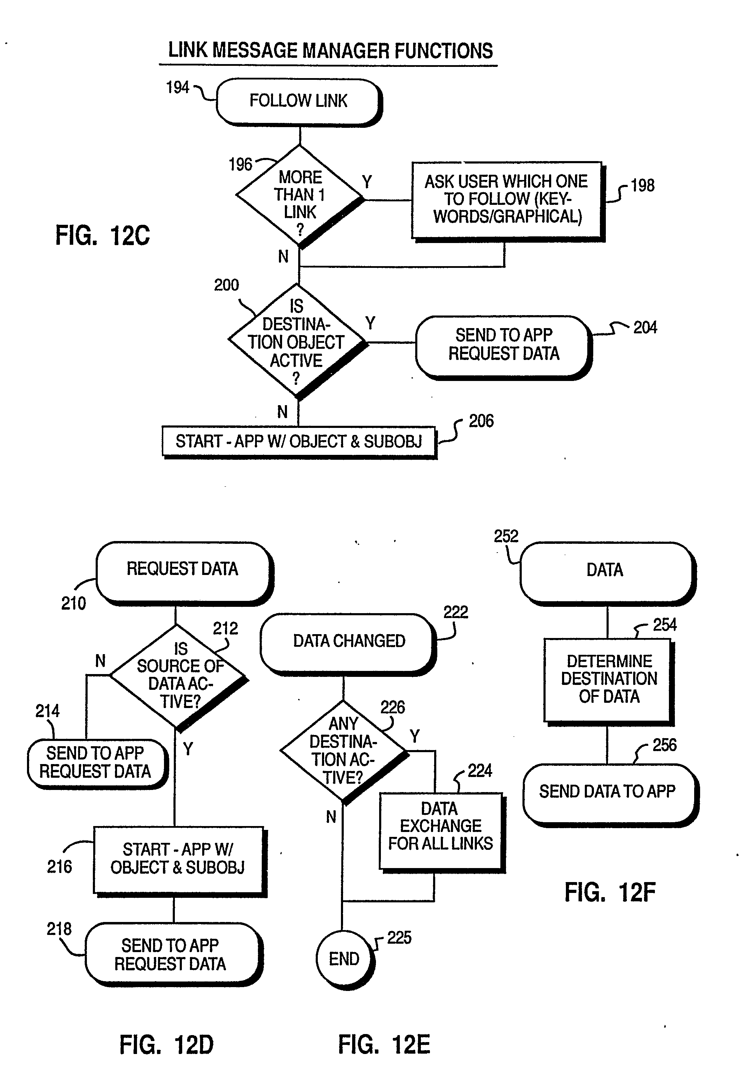

With reference now to Fig. 12C, this flow diagram indicates how the LMM responds to a "follow link" message 194. This series of functions shown in Fig. 12C performed by the link service is in response to the "follow link" message sent by the LP application as represented at 146 in Fig. 9. Basically, the LMM first checks to see if there is more than one link, 196. If there is more than one link, the LPM queries the user to specify which link to follow, 198, either by specifying one or more key words or by designating a link from a graphical display of links by means of a pointing device or the like. As represented at step 200, the LMM determines whether the object's destination or end of the link is active at that point. If it is, the link service will send a "show object" message to the application, 204, causing the application to display the subobject. If the destination is not active, the application is invoked by the LMM at 206. This call will start the application with the object and subobject pre-specified at 116 in Fig. 8.

With reference to Fig. 12D, this flow diagram indicates the functions performed by the LMM in response to a "request data" message sent to the LMM at 150 of Fig. 9 by the LP application. Upon receipt of the request data message at 210 in Fig. 12D, the LMM determines at 212 whether the LP application which owns the subobject at the start of the link is active. The reason for this is that if the source is active, all the LMM needs to do is pass the request for data along to the LP application containing this subobject where upon the LP application will provide the data to the LMM which will then pass it to the requesting LP application as previously described. Thus, at 214, if the source data is active, the LMM sends a message to the application containing the subobject (data) requested. This data request, it may be recalled, is handled by the LP application at 174 of Fig. 10. If the source is not active, the LMM will invoke the application with the object and subobject parameters at 216 and then send the "request data" to the application at 218.

At Fig. 12E, this flow diagram indicates the functions performed by the LMM after receipt of a "data changed" message 222 from the LP application. Such message, it will be recalled, was generated at step 132 of Fig. 8. Specifically in handling this "data changed" message, the LMM first determines whether any destination is active at 226. This situation differs from the previously described determination at 212 of Fig. 12D in handling the "request data" message. When data is changed in a subobject with a hot link and the destination application is not active, there is no need to transfer the data to this application and show it. Thus, at 226 the determination made by the LMM is whether the destination is active whereby, if active, it performs at 224 the same data exchange for all hot links as shown in Fig. 13. However, if the destination is not active as determined at 226, then the LMM subroutine of Fig. 12E ends at 225. Referring briefly back to step 224, it will be noted that the data exchange referenced at that step is for all hot links and thus, for example if three hot links exist, the functions outlined with reference to Fig. 13 will occur for each such link. The reason for this is that if data is changing in a subobject associated with hot links, this may cause several data exchanges to occur with respect to these multiple links.

With reference to Fig. 12F, this flow diagram indicates the functions performed by the LMM in response to message 248 of previously discussed Fig. 13. In this case data is being sent from an application 242 of Fig. 13 to the LMM 252 of Fig. 12F in response to an original request data message 246 of Fig. 13 sent to the application 242 by the LMM. The LMM must now determine in box 254 of Fig. 12F, from prior user end link interaction discussed previously, which application to send the data to. In box 256 of Fig. 12F the actual data message is sent to the appropriate application as illustrated in box 250 of Fig. 13.

With reference to Fig. 12G this flow diagram indicates the functions performed by the LMM in response to a message 154 of Fig. 9 from an LP application indicating a desire to delete a link. Upon receipt of the "delete link" message 228, the LMM will delete the link from the cache and from the database, 230, and send to the applications on both ends of the link or links at 234 messages causing the unmarking of the subobjects related to the links. This message 234 from the LMM to unmark subobjects is handled by the LP application function at 186 of Fig. 10. Fig. 13 has been described previously with respect to step 182 of Fig. 12B.

Table 1 which follows provides a representative listing of the link protocol messages required to effect the objects of the invention which are either provided by the application or applications 133 or the link service of the invention. Following each message name such as "START_LINK" is the list (in parenthesis) of the parameters required to define the particular message which may either be provided by user 131 input to the system 101 of Fig. 7, the application 133 or may already have been provided, stored, and retrieved as necessary by the link service. Comparison of the messages of Table 1 with the flow diagrams of Figs. 8-13 will reveal the logical relationship between the respective messages and the component or function generating the particular message or receiving it. For example, in Fig. 7, again using the "START_LINK" messages as an example, this message will be seen to occur at block 136 in Fig. 9.

Similarly, the "ERROR" message, generated by the link service and more particularly the LMM, may be seen to correspond to block 164 of Fig. 10.

## Table 1

```
GET_OBJECT_INFO(PACKET-NAME,OBJECT_TYPE, OBJECT_NAME,
     SUBOBJECT_LIST, HOT_LIST)

START_LINK(PACKET-NAME,OBJECT-TYPE, OBJECT-NAME,
     SUB-OBJECT-NAME, HOT/WARM/REFERENCE,
     PERMANENT/TEMPORARY, LIST-OF-FORMAT-SUPPORTED)

END_LINK(PACKET-NAME,OBJECT-TYPE,OBJECT-NAME,
     SUB-OBJECT-NAME,LIST-OF-FORMAT-SUPPORTED)

END_LINK_ACK(PACKET-NAME,OBJECT-TYPE,OBJECT-NAME,
     SUB-OBJECT-NAME, HOT/WARM/REFERENCE)

REQUEST_DATA(PACKET-NAME,OBJECT-TYPE,OBJECT-NAME,
     SUB-OBJECT-NAME,FORMAT)

DATA(PACKET-NAME,OBJECT-TYPE,OBJECT-NAME,
     SUB-OBJECT-NAME,FORMAT)

FOLLOW_LINK(PACKET-NAME,OBJECT-TYPE,OBJECT-NAME,
     SUB-OBJECT-NAME)

DELETE_LINK(PACKET-NAME,OBJECT-TYPE,OBJECT-NAME,
     SUB-OBJECT-NAME)

OBJECT_INFO(PACKET_NAME, OBJECT-TYPE, OBJECT-NAME,
     SUBOBJECT_LIST, HOT_LIST)

UNMARK_SUBOBJ(PACKET_NAME, OBJECT_TYPE, OBJECT_NAME,
     SUBOBJECT_NAME)

SHOW_SUBOBJECT(OBJECT_TYPE, OBJECT_NAME,
     SUBOBJECT_NAME)
```

```
ERROR(OBJECT_TYPE, OBJECT_NAME, ERROR_CODE, ERROR_MSG,
    ERROR_INFO)


DATA_CHANGED(PACKET-NAME,OBJECT-TYPE,OBJECT-NAME,
    SUB-OBJECT-NAME)
```

## Claims

1. An interface for use in a computer system environment between one or more application programs comprising a link service code module means responsive to a set of open link protocol messages for interrelating objects or subobjects of said one or more programs.

2. The interface of Claim 1 wherein said module means includes means for generating, in response to at least one message from said set of protocol messages, a reference link interrelating objects or subobjects defined by said one or more application programs.

3. The interface of Claim 2 wherein said module means includes means for generating in response to at least one message from said set of messages a data link interrelating objects or subobjects defined by said one or more application programs.

4. The interface of Claim 3 wherein said module means includes means for generating in response to at least one message from said set of messages, commands for storing said reference or said data links.

5. The interface of Claim 4 wherein said data links are warm or hot.

6. The interface of Claim 1 wherein said application programs comprise first and second application programs each supporting respectively at least one information exchange format, and wherein said code module means further comprises format negotiating means for selecting, in response to open link protocol messages transferred between said code module and said first and second programs, a common one of said information exchange formats for information transfer between said first and second programs.

7. The interface of Claim 6 wherein at least one of said application programs is a non-link protocol application program.

8. The interface of Claim 7 wherein said transferred information is between link protocol applications.

9. The interface of Claim 8 wherein said code module means includes cache memory means for storing said packet or link data.

10. The interface of Claim 9 wherein said code module means further includes database interface means for allocating and managing said cache of packet or link data.

11. The interface of Claim 10 further including link message manager means for analyzing said packet or link data to provide graphical representation of said data.

12. A method for use in a computer system environment to interface one or more application programs comprising
receiving in a link service code module at least one open link protocol messages from a first of said one or more application programs defining a link relationship between objects or subobjects of said one or more programs; and
generating in said link service code module in response to said received at least one protocol messages a command corresponding to said link relationship between said objects or subobjects for storing said link relationship.

13. The method of Claim 12 further including storing said link relationship in a persistent storage media in response to said command generated by said link service code module.

14. The method of Claim 13 further including
generating in said link service code module a next command; and
retrieving said stored link relationship from said persistent storage media in said link service code module in response to said next command.

15. The method of Claim 14 including
generating in said link service code module, in response to said retrieved link relationship, protocol messages corresponding to said retrieved link relationship; and
invoking a second of said one or more application programs with said protocol messages generated in response to said protocol messages generated in response to said retrieved link relationship.

15

16. The method of Claim 15 wherein said link relationship includes a reference link.

17. The method of Claim 16 wherein said link relationship further includes a data link.

18. The method of Claim 17 wherein said data link is warm or hot.

19. The method of Claim 18 further including generating a command in said link service code module for allocating memory space in said system for said one or more application programs.

20. The method of Claim 19 wherein said memory space is at least one shared memory segment shared by said one or more application programs.

21. The method of Claim 20 further including storing by said link service code module in said persistent storage media identifiers of respective different ones of said one or more programs associated with said objects or subobjects in functional correlation with said link relationship; and wherein said storing of said link relationship is automatic in response to said receipt of said at least one protocol message defining said link relationship.

22. The method of Claim 21 wherein said first and second application programs each support a respective at least one information exchange format, and wherein said method further comprises selecting with said link service code module, in response to open link protocol messages transferred between said code module and said first and second programs, a common one of said information exchange formats for information transfer between said first and second programs.

23. An open protocol interface, for use in a computer system environment supporting inter-application messaging and dialog services by application programs, to enable user interrelation of information corresponding to one or more application programs, comprising a link service module responsive to open link protocol messages for managing a plurality of link functions having a link packet manager; a link database interface; and a link message manager interconnected to said link packet manager and said link database interface.

24. The interface of Claim 23 wherein said link packet manager includes means for graphical display of links or packets.

25. The interface of Claim 24 wherein said link packet manager includes means for user interaction with said graphical display means for accessing said link functions.

26. The interface of Claim 25 wherein said link packet manager includes means for non-link protocol application link creation.

27. The interface of Claim 23 wherein said link message manager includes means for negotiating data formats between at least two of said application programs.

28. The interface of Claim 23 wherein said link message manager further includes means for routing data between said at least two application programs in said negotiated data format.

29. The interface of Claim 24 wherein said link message manager includes means for analyzing said links or packets for visual representation in said graphical display.

30. The interface of Claim 23 wherein said interface includes RAM cache means for caching packet data; and wherein said link database interface includes means for allocating buffer space in said RAM cache means.

SPREAD
SHEET

DATA
MOVES

BAR GRAPH

10

13

$

YEAR

12

## FIG. 1

BAR GRAPH

20

$

YEAR

14

NO
DATA
MOVES

TEXT
DOCUMENT

16

17

20

NO
DATA
MOVES

TEXT
DOCUMENT

18

## FIG. 2

FIG. 3

EP 0 369 961 A2

FIG. 4

FIG. 5

FIG. 6

FIG. 7

EP 0 369 961 A2

## LP APPLICATION

```
┌─────────────────┐                          ┌─────────────────┐
│     START       │── 110                    │ START APP WITH  │── 116
│  APPLICATION    │                          │  OBJ & SUBOBJ   │
└─────────────────┘                          └─────────────────┘
         │                                            │
         ▼                                            ▼
┌─────────────────────────┐              ┌─────────────────────────┐
│ ASK USER FOR OBJECT NAME│              │ OPEN OBJECT AND SHOW     │
│           112           │              │        SUBOBJ           │
└─────────────────────────┘              │          118            │
         │                               └─────────────────────────┘
         ▼                                            │
┌─────────────────────────┐                           │
│    OPEN OBJECT          │                           │
│              114        │                           │
└─────────────────────────┘                           │
         │                                            │
         └──────────────────┬─────────────────────────┘
                            ▼
              ┌───────────────────────────────┐
              │ GET OBJECT INFO (SUBOBJECT     │
              │   LIST AND HOT LIST)           │
              │                  119           │
              └───────────────────────────────┘
```

(NORMAL APPLICATION FUNCTIONS)

128

```
        ┌──────────────────────────────────┐
        │ HANDLE LINK USER INTERACTION      │────( A )
        │              122                  │
        └──────────────────────────────────┘
                       │
                       ▼
        ┌──────────────────────────────────┐
        │ HANDLE LINK PROTOCOLS             │────( B )
        │              124                  │
        └──────────────────────────────────┘
                       │
                       ▼
        ┌─────────────────────┐      130              132
        │ HOT SUBOBJ TRACKING │      ◇ HOT ◇    Y   ┌─────────────┐
        │          126        │──── ◇ DATA  ◇──────│ SEND TO LMM │
        └─────────────────────┘      ◇CHANGED◇     │DATA CHANGED │
                                       ◇ ? ◇        └─────────────┘
                                        │ N
```

FIG. 8

## LP APP - HANDLE LINK USER INTERACTION

FIG. 9

A

GET USER ACTION VIA MENUS OR SHELL
134

136 START LINK — Y → SEND TO LMM START LINK — 138

N

140 END LINK — Y → SEND TO LMM END LINK — 142

N

144 FOLLOW LINK — Y → SEND TO LMM FOLLOW LINK — 146

N

148 RE-FRESH LINK — Y → SEND TO LMM REQUEST DATA — 150

N

152 DE-LETE LINK — Y → SEND TO LMM DELETE LINK — 154

N

## LP APP - HANDLE LINK PROTOCOLS

FIG. 10

(B)

160
RECEIVE MSGS FROM LMM

162 ERRORS — Y → RETURN ERRORS TO USER  164
N

166 END LINK ACK — Y → ADD SUBOBJ IN SUBOBJ LIST AND HOT LIST  168
N

170 SHOW SUBOBJ — Y → MOVE WINDOW TO SHOW SUBOBJ  172
N

174 RE-QUEST DATA — Y → CONVERT DATA TO FORMAT REQUESTED  176 → SEND TO LMM DATA  178
N

180 DATA — Y → RECEIVE DATA CONVERT TO INTERNAL FORMAT REFRESH SCREEN  182
N

186 UN-MARK SUBOBJ — Y → DELETE SUBOBJ FROM SUBOBJ LIST & HOT LIST UNMARK LINK INDICATION  188
N

190 OBJECT INFO — Y → UPDATE ACTIVE PACKET NAME & UPDATE SUBOBJ LIST & HOT LIST UPDATE LINK INDICATOR  192
N

## PACKET MANAGER FUNCTIONS

FIG. 11

## LINK MESSAGE MANAGER FUNCTIONS

START LINK — 142

144 ⌐

SEND TO APP ERROR

146

N ◄ IN-PUT IS GOOD

Y

148 ⌐ PACKET ACTIVE ?

N

Y ► SHOW USER PACKET NAME SO ONE CAN CHANGE IT — 150

ASK FOR PACKET NAME — 152

154 ⌐ PACKET EXISTS

N ► ASK FOR PERMA-NANT OR TEMPO-RARY — 156 ► CREATE A PACKET — 158

Y

GET PACKET INTO CACHE — 160

CACHE START LINK INFO — 162

TELL USER START LINK SUCCESSFUL — 164 ► END

FIG. 12A

## LINK MESSAGE MANAGER FUNCTIONS

END LINK —166

170 —

SEND TO APP ERROR  —N—  INPUT GOOD ? —168

Y

174 —

SEND TO APP ERROR  —N—  START LINK EXIST —172

Y

ASK USER ABOUT KEYWORDS, HOT/WARM DATA/REFERENCE —176

178 — DATA LINK —Y→ FORMAT NEGOTIA-TION —180 — FORMAT EXCHANGE FOR LINK —182

N

STORE LINK IN CACHE —184

186 — PER-MANENT PACKET ? —N

Y

188 — ADD LINK TO LINK DATABASE

190 — MSG TO USER LINK ESTABLISHED

192 — SEND TO BOTH APPS END LINK ACK

FIG. 12B

## LINK MESSAGE MANAGER FUNCTIONS

### FIG. 12C

194 — FOLLOW LINK

196 — MORE THAN 1 LINK ? — Y → ASK USER WHICH ONE TO FOLLOW (KEY-WORDS/GRAPHICAL) — 198

N

200 — IS DESTINA-TION OBJECT ACTIVE ? — Y → SEND TO APP REQUEST DATA — 204

N

START - APP W/ OBJECT & SUBOBJ — 206

### FIG. 12D

REQUEST DATA

210

212 — IS SOURCE OF DATA AC-TIVE?

N → SEND TO APP REQUEST DATA — 214

Y

START - APP W/ OBJECT & SUBOBJ — 216

SEND TO APP REQUEST DATA — 218

### FIG. 12E

DATA CHANGED — 222

226 — ANY DESTINA-TION AC-TIVE? — Y → DATA EXCHANGE FOR ALL LINKS — 224

N

END — 225

### FIG. 12F

252 — DATA

DETERMINE DESTINATION OF DATA — 254

SEND DATA TO APP — 256

FIG. 12D          FIG. 12E

## LINK MESSAGE MANAGER FUNCTIONS

228 — DELETE LINK

DELETE LINK FROM CACHE & DATABASE — 230

234 — SEND TO APPS UNMARK SUBOBJ

FIG. 12G

## DATA EXCHANGE FOR LINK

240 — LINK MESSAGE MANAGER

242 — APP1 (START LINK)

244 — APP2 (END LINK)

246 — REQUEST DATA

248 — DATA

250 — DATA

FIG. 13